**Europäisches Patentamt**

**European Patent Office**

**Office européen des brevets**

(11) Veröffentlichungsnummer : **0 136 571 B1**

(12) **EUROPÄISCHE PATENTSCHRIFT**

(45) Veröffentlichungstag der Patentschrift :
**02.03.88**

(51) Int. Cl.⁴ : **C 08 G 18/38, C 08 G 18/66**

(21) Anmeldenummer : **84110451.6**

(22) Anmeldetag : **03.09.84**

(54) **Lagerstabile Tris-(hydroxylalkyl)isocyanurat-Polyol-Dispersionen, Verfahren zu deren Herstellung und deren Verwendung.**

(30) Priorität : **07.09.83 DE 3332251**

(43) Veröffentlichungstag der Anmeldung :
**10.04.85 Patentblatt 85/15**

(45) Bekanntmachung des Hinweises auf die Patenterteilung : **02.03.88 Patentblatt 88/09**

(84) Benannte Vertragsstaaten :
**AT BE CH DE FR GB IT LI NL SE**

(56) Entgegenhaltungen :
**EP-A- 0 004 116
EP-A- 0 032 380
DE-A- 2 836 954
DE-A- 3 119 152
US-A- 3 730 923**

(73) Patentinhaber : **BASF Aktiengesellschaft
Carl-Bosch-Strasse 38
D-6700 Ludwigshafen (DE)**

(72) Erfinder : **Marx, Matthias, Dr.
Seebacher Strasse 49
D-6702 Bad Duerkheim (DE)**
Erfinder : **Ganss, Helmut
Ysenburgstrasse 29
D-6700 Ludwigshafen (DE)**
Erfinder : **Frank, Wolfram, Dr.
Bergstrasse 162
D-6900 Heidelberg (DE)**

# 0 136 571

**Beschreibung**

Tris-(2(hydroxyalkyl)isocyanurate und Verfahren zu deren Herstellung werden in der US-PS 3 088 948 beschrieben. Die Produkte sind in Polyolen und organischen Polyisocyanaten bei Verarbeitungstemperaturen zur Herstellung van Polyurethankunststoffen, insbesondere -Schaumstoffen, praktisch unlöslich und daher als Aufbaukomponente hierfür ungeeignet.

Um Tris-(hydroxyalkyl) isocyanurate, insbesondere Tris-(2-hydroxylethyl)-isocyanurat, dennoch als Ausgangskomponente für Polyurethankunststoffe verwenden zu können, setzte man den Polyurethanformulierungen bestimmte Lösungsmittel oder Lösungsvermittler hinzu. Dies bedeutet jedoch, daß derartige Systeme lediglich als Beschichtungs- oder Lackbindemittel Verwendung finden.

Da bekannt war, daß Tris-(2-hydroxyethyl)isocyanurat Polyurethanüberzügen eine gute Wetterbeständigkeit und Flammwidrigkeit verleiht, hat es nicht an Versuchen gefehlt, durch geeignete Modifizierung die Produkte in eine besser lösliche Form zu bringen.

Nach Angaben der US-PS 3 730 923 werden hierzu die Tris-(2-hydroxyalkyl)-isocyanurate mit Ethylen-, 1, 2-Propylen- oder 1, 2-Butylenoxid oxalkyliert und die erhaltenen Tris-(2-hydroxyalkyl)isocyanurat-Alkylenoxid-Addukte mit organischen Polyisocyanaten in Gegenwart von Treibmitteln und Katalysatoren zu Polyurethanschaumstoffen mit verbesserten Eigenschaften verarbeitet.

Die US-PS 3 174 950 beschreibt eine andere Möglichkeit die Verträglichkeit mit Polyolen zu verbessern. Diese besteht in der Herstellung von Isocyanatgruppen aufweisenden Prepolymeren aus Diphenylmethan-diisocyanaten und Tris(2-hydroxyethylisocyanurat) in organischen Lösungsmitteln. Nachteilig an diesem Verfahren ist, daß die Modifizierung zusätzliche Vorrichtungs- und Verfahrenskosten verursacht, die Eigenschaften der Trist-(2(hydroxyalkyl)isocyanurate in unerwünschter Weine verändert werden können, wobei insbesondere die Flammwidrigkeit verschlechtert wird, und die Wahlfreiheit hinsichtlich der Gestaltung der Endprodukteigenschaften eingeschränkt wird.

Gegenstand der EP-PS 04 116 ist ein Verfahren zur Herstellung von vernetzten kompakten oder zelligen Polyurethan-Elastomeren durch Umsetzung von Polyisocyanaten mit einem oder mehreren Polyolen, wobei als eine Polyolkomponente Tris-(B-hydroxypropyl)isocyanurat oder dessen ethoxylierte Derivate Verwendung finden. Die gegebenenfalls zelligen Elastomeren können nach dem one shot- oder Prepolymer-Verfahren bei Temperaturen von 75 bis 150°C hergestellt werden, wobei die Aufbaukomponenten gemischt und danach sofort zur Reaktion gebracht werden oder aus dem Polyisocyanat, hochmolekularen Polyol und gegebenenfalls Tris-(B-hydroxypropyl)-isocyanurat ein NCO-Gruppen enthaltendes Prepolymeres hergestellt wird, das mit den übrigen Aufbaukomponenten umgesetzt wird. Die in der Patentschrift genannten Polyolmischungen sind bei Raumtemperatur nicht lagerstabil. Die Publikation vermittelt auch keine Lehre, wie die Polyolmischungen stabilisiert werden könnten, so daß sie auch nach mehrwöchiger Lagerung noch zur Verarbeitung nach dem Zweikomponenten-Verfahren geeignet sind.

Die Aufgabe der vorliegenden Erfindung bestand darin, Tris-(hydroxyalkyl)-isocyanurate in einen Aggregatzustand überzuführen, in dem sie ohne zusätzliche Modifizierung auch nach einer Lagerzeit von mehreren Wochen noch unter üblichen Reaktionsbedingungen zu Polyurethanen, insbesondere Polyurethan- oder Polyurethangruppen enthaltenden Polyisocyanuratschaumstoffen, verarbeitet werden können.

Diese Aufgabe wurde gelöst durch die Dispergierung von Tris-(hydroxyalkyl)isocyanuraten in Polyolen.

Gegenstand der Erfindung sind somit lagerstabile Tris-(hydroxyalkyl)isocyanurat-Polyol-Dispersionen, die mit einem Tris-(hydroxyalkyl)isocyanuratgehalt von 20 Gew.-%, bezogen auf das Gesamtgewicht, bei 25°C eine Viskosität von 100 bis 38 300 m. Pas besitzen und enthalten :

a) 2 bis 22 Gew.-Teile Tris-(hydroxyalkyl)isocyanurat, insbesondere Tris-(hydroxyethyl)isocyanurat,

b) 98 bis 78 Gew.-Teile mindestens eines Polyols mit einer Funktionalität von 2 bis 8 und einer Hydroxylzahl von 20 bis 1800 und

c) 0 bis 20 Gew.-Teile, vorzugsweise 0 bis 5 Gew.-Teile, eines oder mehrerer Dispersionsstabilisatoren.

Die lagerstabilen Tris-(hydroxyalkyl)isocyanurat-Polyol-Dispersionen enthalten die dispergierten Tris-(hydroxyalkyl)isocyanurate in einer durchschnittlichen Teilchengröße von kleiner als 0,5 mm, vorzugsweise von kleiner als 0,1 mm und insbesondere von 0,1 bis 0,05 mm und kleiner und besitzen mit einem Tris-(hydroxyalkyl)isocyanuratgehalt von 20 Gew.%, bezogen auf das Gesamtgewicht, bei 25°C eine Viskosität von 100 bis 38 300 m.Pas.

Gegenstände der Erfindung sind ferner die Verwendung der lagerstabilen Tris-(hydroxyalkyl)isocyanurat-Polyol-Dispersionen nach Anspruch 1 zur Herstellung von Polyurethankunststoffen gemäß Anspruch 9 und Verfahren zur Herstellung von lagerstabilen Tris-(hydroxyalkyl)isocyanurat-Polyol-Dispersionen gemäß den Ansprüchen 6 bis 8.

Die erfindungsgemäßen Tris-(hydroxyalkyl)isocyanurat-Polyol-Dispersionen zeigen nach Lagerzeiten von mehr als 3 Monaten noch keine Tris-(hydroxyalkyl)isocyanurat-Sedimentation und waren auch mit höheren Tris-(hydroxyalkyl)isocyanuratgehalten auf üblichen Mehrkomponenten-Verarbeitungsmaschi-

2

nen zur Polyurethanherstellung noch gut handhabbar.

Zu den zur Herstellung der erfindungsgemäßen Tris-(hydroxyalkyl)isocyanurat-Polyol-Dispersionen verwendbaren Ausgangskomponenten ist folgendes auszuführen :

Als Tris-(hydroxyalkyl)isocyanurate (a) kommen beispielsweise in Betracht : Tris-($\beta$-hydroxybutyl)isocyanurat, Tris($\beta$-hydroxypropyl)- bzw. Tris-($\gamma$-hydroxypropyl)-isocyanurat und vorzugsweise Tris-($\beta$-hydroxyethyl)-isocyanurat.

Für die lagerstabilen Dispersionen eignen sich als kohärente Phase bei üblichen Verarbeitungstemperaturen für Polyurethane z.B. bei 10 bis 100°C, vorzugsweise 15 bis 50°C flüssige Polyole (b) mit einer Funktionalität von 2 bis 8, vorzugsweise 2 bis 6 und einer Hydroxylzahl von 20 bis 1800, vorzugsweise 28 bis 750, wobei zur Herstellung von weichelastischen Polyurethanen Polyole mit einer Funktionalität von 2 bis 3 und einer Hydroxylzahl von 28 bis 85, von halbharten Polyurethanen Polyole mit der gleichen Funktionalität und einer Hydroxylzahl von 90 bis 180 und von harten Polyurethanen Polyole mit einer Funktionalität von 3 bis 6 und einer Hydroxylzahl von 200 bis 750 bevorzugt sind.

Besonders bewährt haben sich als Polyole und daher vorzugsweise verwendet werden Polyesterole und/oder Polyetherole. In Betracht kommen jedoch auch andere hydroxylgruppenhaltigen Polymere mit den genannten Funktionalitäten und Hydroxylzahlen, beispielsweise Polyesteramide, Polyacetale, wie z.B. Polyoxymethylene und Butandiolformale, und Polycarbonate, insbesondere solche hergestellt aus Diphenylcarbonat und Hexandiol-1,6 und/oder Butandiol-1,4 durch Umesterung.

Für spezielle Anwendungsbereiche können die Polyole, teilweise durch monofunktionelle primäre und/oder sekundäre Hydroxylgruppen aufweisende organische Verbindungen mit Molekulargewichten von 150 bis 16 000 ersetzt werden. Sofern derartige monofunktionelle Hydroxylgruppen aufweisende Verbindungen mitverwendet werden, werden diese in Mengen von 1 bis 30 Gew.%, vorzugsweise 2 bis 15 Gew.%, bezogen auf das Polyolgewicht, eingesetzt.

Geeignete Polyesterole können beispielsweise aus Dicarbonsäuren, vorzugsweise aliphatischen Dicarbonsäuren, mit 2 bis 12, vorzugsweise 4 bis 8 Kohlenstoffatomen im Alkylenrest und mehrwertigen Alkoholen mit 2 bis 10, vorzugsweise 2 bis 6 Kohlenstoffatomen, insbesondere Diolen, hergestellt werden. Genannt seien beispielhaft aliphatische Dicarbonsäuren, wie Pimelinsäure, Korksäure, Azelainsäure, Sebacinsäure, Undecandisäure, Dodecandisäure und vorzugsweise Bernstein-, Glutar- und Adipinsäure und aromatische Dicarbonsäuren, wie Phthalsäure und Terephthalsäure. Beispiele für mehrwertige, insbesondere zwei- und dreiwertige Alkohole sind : 1,2- bzw. 1,3-Propylenglykol, Dipropylenglykol, Neopentylglykol, Pentandiol-1,5, Octandiol-1,8, Decandiol-1,10, Glycerin, Trimethylolpropan und vorzugsweise Ethylenglykol, Diethylenglykol, Butandiol-1,4, und Hexandiol-1,6.

Die Dicarbonsäuren und mehrwertigen Alkohole können sowohl einzeln als auch in Form von Gemischen eingesetzt werden. Biespielhaft genannt seien Polyesterole auf Basis Adipinsäure-Diethylenglykol, Adipinsäure-Hexandiol-Neopentylglykol, Adipinsäure-Ethylenglykol-Butandiol, Adipin-, Glutar-, Bernsteinsäure-Ethylenglykol-Diethylenglykol u.a.

Die Polyesterole sind üblicherweise di- bis trifunktionell und besitzen Hydroxylzahlen von 20 bis 210, vorzugsweise von 28 bis 110.

Insbesondere als Polyole verwendet werden jedoch Polyetherole, die nach bekannten Verfahren aus einem oder mehreren Alhylenoxiden mit 2 bis 4 Kohlenstoffatomen im Alkylenrest und einem Startermolekül, das 2 bis 8, vorzugsweise 2 bis 6 aktive Wasserstoffatome gebunden enthält, hergestellt werden. Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht : Wasser, Dicarbonsäuren, wie Bernsteinsäure, Adipinsäure, Phthalsäure und Terephthalsäure, gegebenenfalls N-mono-, N,N- und N,N'-dialkylsubstituierte Diamine mit 1 bis 4 Kohlenstoffatomen im Akylrest, wie gegebenenfalls mono- und dialkylsubstituiertes Ethylendiamin, 1,2- bzw. 1,3-Propylendiamin, 1,4-Butylendiamin, 1,6-Hexamethylendiamin und 4,4'-, 2,4'- und 2,2'-Diaminodiphenylmethan, 2,4- und 2,6-Diamino-toluol, Alkanolamine, wie Ethanolamin, Diethanolamin, N-Methyl- und N-Ethyl-diethanolamin und Triethanolamin, Ammoniak, Hydrazin und vorzugsweise mehrwertige, insbesondere zwei- und dreiwertige Alkohole, wie Ethylenglykol, Propylenglykol-1,2 und -1,3, Dethylenglykol, Dipropylenglykol, Butylenglykol-1,4, Hexamethylenglykol-1,6, Glycerin, Trimethylolpropan, Pentaerythrit, Sorbit und Saccharose.

Bevorzugt verwendet werden di- bis hexafunktionelle Polyetherole mit Hydroxylzahlen von 20 bis 1800, vorzugsweise 28 bis 750, die sowohl Ethylenoxide als auch 1,2-Propylenoxideinheiten in der Oxyarlylenkette enthalten, wobei diese entweder statistisch oder blockweise in der Oxyalkylenkette angeordnet sein können. Zweckmäßigerweise eingesetzt werden di- und/oder trifunktionelle Polyetherole mit Hydroxylzahlen von 28 bis 600, die vorzugsweise primäre Hydroxylgruppen besitzen.

Ebenso können Polyetherole aus Tetrahydrofuran oder Gemischen von Tetrahydrofuran mit den oben genannten Alkylenoxiden verwendet werden.

Geeignete monofunktionelle Hydroxylgruppen aufweisende organische Verbindungen, die gegebenenfalls mit den Polyolen im Gemisch eingesetzt werden können, sind beispielsweise hydroxylgruppenhaltige Polyether mit Molekulargewichten von 150 bis 16 000, vorzugsweise von 400 bis 4 000, die durch Umsetzung der vorstehend beschriebenen Alkylenoxide mit monofunktionellen Startermolekülen erhalten werden. Im einzelnen seien als monofunktionelle Startermoleküle genannt : niedermolekulare

**0 136 571**

monofunktionelle aliphatische Alkohole mit 1 bis 18, vorzugsweise 1 bis 6 Kohlenstoffatomen im Alkylrest, wie Methanol, Ethanol, Propanol, Butanol, Hexanol, Decanol, Laurylalkohol, Neopentylalkohol, Ethylenhexanol, Cyclohexanol, tert.- Butylcyclohexanol, Phenylethanol und insbesondere Allylalkohol und Methylbutenol ; aromatische Monohydroxylverbindungen mit 6 bis 24 Kohlenstoffatomen, wie Phenol, Naphthol, alkylierte Phenole, wie Kresol, Trimethyphenol, Nonylphenol, Dodecylphenol u.a. und organische Monocarbonsäuren mit 1 bis 18. Kohlenstoffatomen, wie Essigsäure, Propionsäure, Buttersäure, Ethylenhexansäure, Acrylsäure und ähnliche Verbindungen. Die Startermoleküle können auch hier sowohl einzeln als auch in Gemischen untereinander eingesetzt werden, ebenso können die Alhylenoxide einzeln, alternierend nacheinander oder als Mischungen zur Polymerisation verwendet werden. Die Polymerisation der Alkylenoxide mit Hilfe der Startermoleküle wird unter an sich bekannten Reaktionsbedingungen, gegebenenfalls in Gegenwart von üblichen Katalysatoren durchgeführt.

Die nach den erfindungsgemäßen Verfahren hergestellten Tris-(hydroxyalkyl)-isocyanurat-Polyol-Dispersionen mit einer durchschnittlichen Teilchengröße von kleiner als 0,5 mm von mindestens 90 % der Tris-(hydroxyalkyl)isocyanuratpartikel sind bereits sehr lagerstabil. Dieser Effekt kann jedoch durch den Zusatz von üblichen oder insbesondere ausgewählten Stabilisatoren in Mengen von 0,001 bis 20 Gew.%, vorzugsweise 0,005 bis 5 Gew.%, bezogen auf das Tris-(hydroxyalkyl)isocyanuratgewicht, noch erheblich verbessert werden. Bewährt haben sich insbesondere Stabilisatoren aus der Gruppe der

c1) Kieselsäuren und Silikate,

c2) Salze, vorzugsweise Alkalimetallsalze, wie Natrium- oder Kaliumsalze, und Ammoniumsalze von perfluorierten Alkylcarbonsäuren mit 4 bis 20, vorzugsweise 8 bis 18 Kohlenstoffatomen, Salze von Alkylsulfonsäuren oder perfluorierten Alkylsulfonsäuren mit 4 bis 20, vorzugsweise 8 bis 18 Kohlenstoffatomen sowie Polyperfluretherole mit Molekulargewichten von 300 bis 6 000, vorzugsweise von 500 bis 4 000 und/oder

c3) Salze von Fettalkoholsulfaten mit 6 bis 30, vorzugsweise 8 bis 22 Kohlenstoffatomen.

Vorzugsweise zur Anwendung kommen jedoch Mischungen aus mindestens einem Stabilisator der Gruppe (c1) und/oder mindestens einem Stabilisator aus der Gruppe (c2) und/oder mindestens einem Stabilisator aus der Gruppe (c3).

Die Kieselsäuren und Silikate werden, bezogen auf das Tris-(hydroxyalkyl)isocyanuratgewicht, in Mengen von 0,01 bis 20 Gew.%, vorzugsweise 0,05 bis 5 Gew.%, eingesetzt. Die Kieselsäuren können durch Flammenhydrolyse oder durch Fällung hergestellt werden. Durch Flammenhydrolyse gewonnene Kieselsäuren sind beispielsweise unter dem Warenzeichen [R] Aerosil der Degussa, Frankfurt, im Handel. Entsprechende Produkte besitzen Schüttdichten von ungefähr 40 bis 60 g/L. Oberflächen nach der BET-Methode von ungefähr 130 bis 410 $m^2$/g (S. Brunauer et al. J. Amer. Chem. Soc. 60, 309 (1938) und enthalten mehr als 99,8 % $SiO_2$, < 0,05 % $Al_2O_3$, < 0,003 % $Fe_2O_3$, < 0,03 % $TiO_2$ und 0,025 % Chlorwasserstoff.

Gefällte Kieselsäuren besitzen Stampfdichten (nach DIN 53 194) von 70 bis 200 g/L, Oberflächen nach BET von 160 bis 650 $m^2$/g und enthalten 98 bis 99,5 % $SiO_2$, 0,2 % $Al_2O_3$, 0,01 bis 0,03 % $Fe_2O_3$ und 0,2 bis 1,0 % $Na_2O$.

Gefällte Kieselsäuren werden beispielsweise von der Degussa, Frankfurt, hergestellt und sind unter den Namen gefällte Kieselsäuren FK 320, FK 300, FK 310, FK 383, [R] Sipenat und [R] Durosil käuflich erwerbbar.

Geeignete Silikate besitzen Stampfdichten (nach DIN 53 194) von ungefähr 135 bis 165 g/L, Oberflächen nach BET von 35 bis 100 $m^2$/g und enthalten ungefähr 66 bis 91 % $SiO_2$, 0,2 bis 26 % $Al_2O_3$, ungefähr 0,03 % $Fe_2O_3$, gegebenenfalls ungefähr 6 % CaO und ungefähr 2 bis 8 % $Na_2O$. Entsprechende Produkte werden von der Degussa, Frankfurt, hergestellt und unter den Bezeichnungen Aluminiumsilikat P 820, [R] Transpafill und [R] Calsil vertrieben.

Die Stabilisatoren der Gruppen (c2) und (c3) werden in Mengen von 0,001 bis 5 Gew.%, vorzugsweise 0,005 bis 1 Gew.%, bezogen auf das Tris-(hydroxyalkyl)isocyanuratgewicht, eingesetzt. Im einzelnen seien beispielhaft genannt : die Kaliumsalze von perfluorierten Alkylcarbonsäuren mit 4 bis 20 Kohlenstoffatomen, wie Perfluorcapronsäure, Perfluorönanthsäure, Perfluoroctansäure, Perfluorpelargonsäure, Perfluorcaprinsäure, Perfluorlaurinsäure, Perfluormyristinsäure, Perfluorpalmitinsäure, Perfluorstearinsäure, Perfluorölsäure, Perfluorlinolsäure, Perfluorlinolensäure, die Kaliumsalze von gegebenenfalls perfluorierten Alkylsulfonsäuren mit 4 bis 20 Kohlenstoffatomen, wie Perfluorbutan-, Perfluorpentan-, Perfluorhexan-, Perfluorheptan-, Perfluoroctan-, Perfluordodecan- und Perfluorhexadecansulfonsäure und Polyperfluretherole mit Molekulargewichten von 300 bis 6 000, wie die entsprechenden Polymerisate des Tetrafluorethylenoxids und Hexafluorpropenepoxids sowie Salze von Fettalkoholsulfaten, wie Natriumlaurylsulfat.

Kaliumperfluoralkylsulfonate, Ammoniumperfluoralkylcarboxylate, Kaliumfluoralkylcarboxylate und fluoriertes Alkylpolyoxyethylenethanol sind Handelsprodukte und werden von der Firma 3 M Company unter dem Warenzeichen [R] Fluorad vertrieben. Natriumsalze von Fettalkoholsulfaten, z.B. Laurylsulfat sind ebenfalls erhältlich z.B. unter dem Warenzeichen [R] Duponol der Firma Dupont.

Zur Herstellung der erfindungsgemäßen Dispersionen werden die Tris-(hydroxyalkyl)isocyanurate (a) und Polyole (b) gemischt und in Abwesenheit oder Gegenwart der Dispersionsstabilisatoren üblicherweise 1 bis 300 Minuten lang auf Temperaturen von über 100°C, vorzugsweise 101 bis 220°C, insbesondere 110 bis 140°C bis zur Bildung einer Klaren Lösung erwärmt. Werden als kohärente Phase Polyesterole

4

verwendet, so werden die Mischungen aus Tris-(hydroxyalkyl)isocyanuraten und Polyesterolen nach einer vorzugsweise angewandten Verfahrensvariante bei Temperaturen von über 130°C, vorzugsweise 130 bis 190°C, 15 bis 300 Minuten, vorzugsweise 30 bis 180 Minuten lang, vorzugsweise in Abwesenheit von Dispersionsstabilisatoren, thermisch behandelt. Die Lösung läßt man danach unter Rühren mit geringer Scherwirkung kontinuierlich oder vorzugsweise stufenweise abkühlen. Die Abkühlzeit beträgt 0,5 bis ungefähr 20 Stunden, vorzugsweise 0,5 bis 5 Stunden. Durch die Abkühlgeschwindigkeit und gegebenenfalls durch Einschieben von Haltepunkten bei der stufenweisen Abkühlung kann die Partikelgröße der auskristallisierenden Tris-(hydroxyalkyl)isocyanurate gesteuert und damit die Viskosität und Lagerstabilität der erfindunggemäßen Dispersionen in einem gewissen Ausmaße beeinflußt werden. Ein Einfluß auf die genannten Eigenschaften wird auch durch die Art und Zusammensetzung der verwendeten Polyole oder mischung auf die Dispersion ausgeübt.

Nach einer bevorzugten Ausführungsform wird der Lösung aus den Aufbaukomponenten (a) und (b) sowie gegebenenfalls (c) bei einer Temperatur oberhalb der Entmischungstemperatur der Tris-(hydroxyalkyl)isocyanurate und Polyole und unterhalb der Schmelztemperatur des Kristallisationsbeschleunigers in einer Menge von 0,01 bis 3,0 Gew.-Teilen pro 100 Gew.-Teilen Lösung mindestens ein organischer und/oder anorganischer Kristallisationsbeschleuniger einverleibt. Der genannte Temperaturbereich wird in Abhängigkeit von den verwendeten Ausgangskomponenten experimentell bestimmt. Als Kristallisationsbeschleuniger werden vorzugsweise kristalline Tris-(hydroxyalky)isocyanurate oder insbesondere bereits zuvor hergestellte Dispersionen aus denselben Aufbaukomponten (a) und (b) verwendet. Geeignet sind auch Kristallisationsbeschleuniger wie z.B. Talkum, Metallstearate, beispielsweise Zink-, Calcium- und/oder Magnesiumstearat und andere Nukleierungsmittel.

Nach einer anderen Verfahrensvariante läßt man das Tris-(hydroxyalkyl)isocyanurat (a) zunächst aus dem Teil des Polyols (b) auskristallisieren und verdünnt anschließend die erhaltene Dispersion bei Temperaturen unter 100°C mit dem restlichen Teil des gleichen Polyols (b) oder einem anderen Polyol (b).

Bei Herstellung des erfindungsgemäßen Dispersionen ist auch von Bedeutung, daß der Schmelzpunkt der kristallinen Tris-(hydroxyalkyl)isocyanurate (a) oberhalb der Entmischungstemperatur der Lösung aus den Komponenten (a) und (b) liegt. Im umgekehrten Fall kann es zur Bildung von groben Feststoffpartikeln kommen, die eine Verarbeitung der Dispersion erschweren oder gar unmöglich machen.

Die Herstellung der erfindungsgemäßen Dispersionen kann diskontinuierlich in Rührkesseln oder kontinuierlich in einer Rührkesselkaskade durchgeführt werden.

Die erfindungsgemäßen Tris-(hydroxyalkyl)isocyanurat-Polyol-Dispersionen können ferner hergestellt werden durch Zerkleinern der kristallinen Tris-(hydroxyalkyl)isocyanurate in situ in den Polyolen, gegebenenfalls in Gegenwart der Dispersionsstabilisatoren, mit örtlichen Energiedichten von 36 bis 10 800 MJ/m$^3$, vorzugsweise von 72 bis 3 600 MJ/m$^3$.

Tris-(hydroxyalkyl)isocyanurat, Polyol und gegebenenfalls Dispersions- stabilisator werden hierzu gemischt und bei Temperaturen von 10 bis 95°C, vorzugsweise 30 bis 90°C üblicherweise in 1 bis 10, vorzugsweise 2 bis 6 Mahlpassagen in situ auf die genannte Teilchengrößen zerkleinert und hierbei gleichzeitig dispergiert. Hierzu kann beispielsweise die gesamte Tris-(hydroxyalkyl)isocyanuratmenge mit der gesamten Polyol- und Dispersionsstabilisatormenge bei Temperaturen von 10 bis 30°C gemischt werden. Es ist jedoch auch möglich, die gesamte Polyolmenge mit einem bestimmten Teil des Tris-(hydroxyalkyl)isocyanurats und Stabilisators zu mischen und dieses Gemisch auf eine bestimmte Teilchengröße zu zerkleinern und danach der Mischung das restliche Tris-(hydroxylalkyl)isocyanurat einzuverleiben und zu zerkleinern oder eine Teilmenge Polyol mit der gesamten Tris-(hydroxyalkyl)isocyanuratmenge gegebenenfalls in Gegenwart des Dispersionsstabilisators zu vermahlen und im Laufe des Mahlvorgangs zusätzliches Polyol und gegebenenfalls Dispersionsstabilisator hinzuzufügen.

Die Zerkleinerung kann beispielsweise in mechanischen Dispergiervorrichtungen, vorzugsweise in Dispergiermaschinen mit hohen örtlichen Energiedichten mit Mahlkörpern, wie z.B. Rührwerkskugelmühlen, Sandmühlen, Netsch-Mühlen, Perl-Mühlen, Dyno-Mühlen, Planetenkugelmühlen und Kesselmühlen durchgeführt werden. Als Mahlkörper kommen vorzugsweise kugelförmige Mahlkörper in Betracht, die beispielsweise aus Glas, Keramik, Metall, hartem abriebdestem Kunststoff, z.B. Polyamid, sein können und deren Durchmesser zwischen 0,2 bis 8, vorzugsweise 0,4 bis 5 mm beträgt.

Die erfindungsgemäßen Tris-(hydroxyalkyl)isocyanurat-Polyol-Dispersionen eignen sich als Polyolkomponente zur Herstellung von kompakten, mikrozellularen oder geschäumten Polyurethan-, Polyisocyanurat- und/oder Polycarbodiimidgruppen enthaltenden Kunststoffen. Vorzugsweise verwendet werden sie zur Herstellung von Polyurethan- oder Polyurethangruppen enthaltenden Polyisocyanuratschaumstoffen. Formulierungen mit den erfindungsgemäß Dispersionen zeichnen sich durch ein besonders gutes Fließverhalten bei gleichzeitig guter Durchhärtung aus.

Gegenüber aus üblichen Polyolen hergestellten Polyurethanen oder Polyurethangruppen enthaltenden Polyisocyanuraten weisen die unter Verwendung der erfindungsgemäßen Dispersionen hergestellten Kunststoffe zahlreiche Vorteile auf, von denen folgende besonders hervorgehoben seien : Die Flammwidrigkeit der erhaltenen Kunststoffe wird auch ohne die zusätzliche Mitverwendung von üblichen Flammschutzmitteln z.B. Halogen- und/oder Phosphor enthaltenden Verbindungen entscheidend verbessert. Die Schaumstoffe zeigen eine feinzellige und gleichmäßige Zellstruktur, die eine verbesserte Wärmeisolierung bewirkt. Polyurethangruppen enthaltende Polyisocyanuratschaumstoffe besitzen einen relativ geringen Abrieb. Bei der Herstellung von großvolumigen Bockschaumstoffen wird die Wärmeentwicklung im Zentrum des Schaumstoffblocks beträchtlich verringert und dadurch die Gefahr der Kernverbrennung minimiert.

Zur Herstellung der vorzugsweise schaumförmigen Polyurethane oder Polyurethangruppen enthaltenden Polyisocyanurate werden neben den erfindungsgemäßen Tris-(hydroxyalkyl)isocyanurat-Polyol-Dispersionen, die an sich bekannten Ausgangsstoffe, z.B. Polyole, organischen Polyisocyanate, Katalysatoren, gegebenenfalls Treibmittel, Kettenverlängerungsmittel, Hilfs- und Zusatzstoffe verwendet.

Als Polyole können die erfindungsgemäßen Tris-(hydroxyalkyl)isocyanurat-Polyol-Dispersionen direkt eingesetzt werden. Die Dispersionen können jedoch auch mit den gleichen oder anderen üblichen Polyolen gemischt und auf die erforderlichen Feststoffgehalte eingestellt werden. Als übliche Polyole im Sinne der Erfindung sind hierbei die eingangs zur Herstellung der Tris-(hydroxyalkyl)isocyanurat-Polyol-Dispersionen beschriebenen zu verstehen.

Als Polyisocyanate eignen sich beispielsweise aliphatische, cycloaliphatische und aromatische mehrwertige, insbesondere zweiwertige Isocyanate. Im einzelnen seien beispielhaft genannt : aliphatische Diisocyanate wie Ethylen-, 1,4-Tetramethylen-, 1,6-Hexamethylen- und 1,12-Dodecandiisocyanat ; cycloaliphatische Diisocyanate, wie Cyclohexan-1,3- und 1,4-diisocyanat sowie beliebige Gemische dieser Isomeren, 1-Isocyanato-3, 3,5-trimethyl-5-isocyanatomethyl-cyclohexan, 2,4- und 2,6-Hexahydrotoluylen-diisocyanat sowie beliebige Gemische dieser Isomeren, 4,4'- und 2,4'-Diisocyanato-dicyclohexylmethan ; aromatische Diisocyanate, wie 1,3- und 1,4-Phenylendiisocyanat, 2,4- und 2,6-Toluylendiisocyanat sowie beliebige Gemische dieser Isomeren, 2,2'-, 2,4'- und 4,4'-Diphenylmethan-diisocyanat und Naphthalin-1,5-diisocyanat ; aromatische Polyisocyanate wie 4,4', 4''-Triphenylmethan-triisocyanat, 2,4,6-Triisocyanatobenzol und Polyphenyl-polymethylen-polyisocyanate. Verwendet werden können ferner modifizierte Polyisocyanate, beispielsweise Carbodiimidgruppen aufweisende Polyisocyanate (DE-PS 10 92 007), Allophanatgruppen aufweisende Polyisocyanate (GB-PS 994 890 ; BE-PS 761 626), Isocyanuratgruppen aufweisende Polyisocyanate (DE-PS 10 22 789, DE-PS 12 22 067, DE-PS 10 27 394, DE-OS 19 29 034 und DE-OS 20 04 048), Urethangruppen aufweisende Polyisocyanate (BE-PS 752 261, US-PS 3 394 164), Biuretgruppen aufweisende Polyisocyanate (DE-PS 11 01 394, GB-PS 889 050) und Estergruppen aufweisende Polyisocyanate (GB-PS 965 474, GB-PS 10 72 956, US-PS 3 567 763, DE-PS 12 31 688).

Bevorzugt verwendet werden die technisch gut zugänglichen aromatischen Di- und Polyisocyanate, wie 2,4- und 2,6-Toluylendiisocyanat sowie beliebige Gemische dieser Isomeren, 2,2'-, 2,4'- und 4,4'-Diphenylmethan-diisocyanat sowie beliebige Gemische dieser Isomeren, Mischungen aus 2,2'-, 2,4'-, 4,4'-Diphenylmethan-diisocyanaten und Polyphenyl-polymethylen-polyisocyanaten (Roh-MDI), Mischungen aus 2,4- und 2,6-Totuylen-diisocyanaten und Roh-MDI sowie die entsprechenden mit Carbodiimid-, Urethan-, Allophanat-, Isocyanurat-, Harnstoff- und/oder Biuretgruppen modifizierten Polyisocyanate. Die genannten Di- und Polyisocyanate können einzeln oder in Form von Mischungen eingesetzt werden.

Geeignete Katalysatoren zur Beschleunigung der Polyurethanbildung zwischen den Polyolen, dem Wasser, gegebenenfalls Kettenverlängerungsmitteln, und den Polyisocyanaten sind beispielsweise tertiäre Amine, wie Dimethylbenzylamin, N,N,N',N'-Tetramethyl-diamino-ethylether, Bis-(dimethylaminopropyl)-harnstoff, N-Methyl- bzw. N-Ethylmorpholin, Dimethylpiperazin, 1,2-Dimethylimidazol, 1-Azobicyclo-(3,3,0)-octan und vorzugsweise Triethylendiamin, Metallsalze, wie Zinndioctoat, Bleioctoat, Zinndiethylhexoat und vorzugsweise Zinn-(I)salze wie Dibutylzinndilaurat, Dibutylzinndiacetat, Tetrabutylzinndisulfid und Bis-(tri-n-butylzinn)oxid sowie insbesondere Mischungen aus tertiären Aminen und organischen Zinnsalzen. Vorzugsweise verwendet werden 0,1 bis 5,0 Gew.% Katalysator auf Basis tertiärer Amine und/oder 0,01 bis 1,0 Gew.% Metallsalze, bezogen auf das Gesamtgewicht der Hydroxylgruppen enthaltenden Verbindungen.

Zur Herstellung von Poluyrethangruppen enthaltenden Polyisocyanuratschaumsotffen haben sich die üblichen Cyclisierungs- und Polymerisationskatalysatoren für Polyisocyanate bewährt. Als Beispiele seien genannt : starke Basen, wie quarternäre Ammoniumhydroxide, beispielsweise Benzyltrimethylammoniumhydroxid ; Alkalimetallhydroxide, beispielsweise Natrium- oder Kaliumhydroxid ; Alkalimetallalkoxide, beispielsweise Natriummethylat und Kaliumisopropylat ; Trialkylphosphine, beispielsweise Triethylphosphin ; Alkylaminoalkylphenole, beispielsweise 2, 4, 6-Tris-(dimethylaminomethyl)-phenol ; 3- und/oder 4-substituierte Pyridine, beispielsweise 3- oder 4-Methylpyridin ; metall-organische Salze, beispielsweise Tetrakis-(hydroxyethyl)-natriumborat ; Friedel-Crafts-Katalysatoren, beispielsweise Aluminiumchlorid, Eisen-(III)-chlorid, Borfluorid und Zinkchlorid und Alkalimetallsalze von schwachen organischen Säuren und Nitrophenolaten, beispielsweise Kaliumoctoat, Kalium-2-ethyl-hexoat, Kaliumbenzoat, Natriumpikrat und Phthalimid-Kalium. Vorzugsweise verwendet werden die stark basischen N, N', N''-Tris-(dialkylaminoalky)-s-hexahydrotriazine, beispielsweise das N, N', N''-Tris-(dimethylaminopropyl)-s-hexahydrotriazin.

Die geeignete Menge an Katalysator zur Herstellung der Polyurethangruppen enthaltenden Polyisocyanuratschaumstoffe ist abhängig von der Wirksamkeit des in Frage kommenden Katalysators. Im allgemeinen hat es sich als zweckmäßig erwiesen, 1 bis 15 Gewichtsteile, vorzugsweise, 3,5 bis 10 Gewichtsteile Katalysator für jeweils 100 Gewichtsteile an organischem Polyisocyanat zu verwenden.

Zu Treibmitteln, welche zur Herstellung von Polyurethan- oder Polyurethangruppen enthaltenden Polyisocyanuratschaumstoffen verwendet werden können, gehört Wasser, das mit Isocyanatgruppen unter Bildung von Kohlendioxid reagiert. Die Wassermengen, die zweckmäßigerweise verwendet werden, betragen 0,1 bis 3 Gew.%, bezogen auf das Gewicht an Polyisocyanat. Gegebenenfalls können auch größere Wassermengen verwendet werden.

Andere verwendbare Treibmittel sind niedrig siedende Flüssigkeiten, die unter dem Einfluß der exothermen Polyadditions- bzw. Polymerisationsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung der Schaumstoffe hängt ab von der Schaumdichte, die man erreichen will, sowie gegebenenfalls von der Mitverwendung von Wasser. Im allgemeinen liefern Mengen von 5 bis 40 Gewichtsprozent, bezogen auf 100 Gewichtsteile organisches Polyisocyanat, zufriedenstellende Ergebnisse.

Gegebenenfalls ist es auch zweckmäßig, zur Herstellung der gegebenenfalls geschäumten Polyurethane oder Polyurethangruppen enthaltenden Polyisocyanurate neben den höhermolekularen Polyolen zusätzlich Kettenverlängerungsmittel und Vernetzer zu verwenden. Die Kettenverlängerungsmittel besitzen Molekulargewichte kleiner als 1.000, vorzugsweise von 30 bis 600 und weisen vorzugsweise zwei aktive Wasserstoffatome auf. In Betracht kommen beispielsweise aliphatische und/oder aromatische Diole mit 2 bis 14, vorzugsweise 2 bis 6 Kohlenstoffatomen, wie Propandiol, Pentandiol, Hexandiol-1,6 und vorzugsweise Ethandiol, Diethylenglykol, Butandiol-1, 4 und Bis-(2-hydroxyethyl)-hydrochinon, Diamine, wie Ethylendiamin und gegebenenfalls 3,3', 5,5'-di- bzw. tetraalkyl- oder halogensubstituierte 4,4'-Diaminodiphenylmethane, Isophorondiamin, Ethanolamin. Geeignete Vernetzer sind beispielsweise Triethanolamin und dreiwertige Alkohole, wie Glycerin, Trimethylolpropan und niedermolekulare hydroxylgruppenhaltige Polyalkylenoxide aus Ethylen- und/oder 1,2-Propylenoxid und den vorgenannten Diolen, Triolen, Diaminen und/oder Alkanolaminen.

Der Reaktionsmischung können auch noch Zusatzstoffe einverleibt werden. Genannt seien beispielsweise oberflächenaktive Schaumstabilisatoren, Hydrolyseschutzmittel, Porenregler, fungistatisch und bakteriostatisch wirkende Substanzen, Farbstoffe, Pigmente, Flammschutzmittel, Lichtstabilisatoren und Antioxidantien.

In Betracht kommen beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, oxethylierte Alkylphenole, oxethylierte Fettalkohole, Paraffinöle, Rizinusöl- bzw. Risinolsäureester und Türkischrotöl, die in Mengen von 0,2 bis 6 Gewichtsteilen pro 100 Gewichtsteile Polyisocyanat angewandt werden.

Neben den Tris-(hydroxyalkyl)isocyanuraten können gegebenenfalls auch andere geeignete Flammschutzmittel der gegebenenfalls schaumfähigen Reaktionsmischung einverleibt werden.

Nähere Angaben über die oben genannten anderen üblichen Zusatzstoffe sind der Fachliteratur, beispielsweise der Monographie von J.H. Saunders und K.C. Frisch « High Polymers » Band XVI, Polyurethanes, Teil 1 und 2, Verlag Interscience Publishers 1962 bzw. 1964, zu entnehmen.

Wie bereits dargelegt wurde, können zur Herstellung der gegebenenfalls geschäumten Polyurethan-Kunststoffe die Tris-(hydroxyalkyl)isocyanurat-Polyol-Dispersionen mit den oben genannten Polyolen verdünnt und so auf den erforderlichen, vorteilhaften Füllstoffgehalt eingestellt werden.

Zur Herstellung von Polyurethanschaumstoffen werden die Polyisocyanate und Dispersionen bzw. Mischungen aus Dispersionen, Polyolen und Kettenverlängerungsmitteln bzw. Vernetzern in solchen Mengen zur Umsetzung gebracht, daß das Verhältnis von Zerewitinoff-aktiven Gruppen : NCO-Gruppen 1 : 0,8 bis 2,5, vorzugsweise 1 : 0,9 bis 1,2, insbesondere ungefähr 1 : 1 beträgt und der Tris-(hydroxyalkyl)isocyanuratgehalt in der schaumfähigen Mischung 5 bis 40 Gew.%, vorzugsweise 10 bis 20 Gew.%, bezogen auf das Gewicht der Polyisocyanat-Polyolmischung ist.

Zur Herstellung von Polyisocyanuratschaumstoffe haben sich Mengenverhältnisse von NCO-Gruppen des Polyisocyanats zu Hydroxylgruppen der Polyole von 2 bis 60 : 1, vorzugsweise 2 bis 10 : 1 bewährt. Der Tris-(hydroxyalkyl)isocyanuratgehalt beträgt 3 bis 40 Gew.%, vorzugsweise 10 bis 20 Gew.%, bezogen auf das Gesamtgewicht von Polyisocyanat und Polyol.

Die gegebenenfalls geschäumten Polyurethan- bzw. Polyurethangruppen enthaltenden Polyisocyanurat-Kunststoffe werden nach dem Präpolymer- und vorzugsweise dem one shot-Verfahren hergestellt. Hierzu mischt man die Polyisocyanate mit der Tris-(hydroxyalkyl)isocyanurat-Polyol-Dispersion bzw. Mischungen aus Dispersion und Polyolen, Katalysatoren, Treibmitteln und gegebenenfalls Kettenverlängerungsmitteln und Zusatzstoffen in den genannten Mengenverhältnissen intensiv bei Temperaturen von 0 bis 50°C, vorzugsweise 15 bis 40°C und läßt danach die Reaktionsmischung in offenen oder geschlossenen, gegebenenfalls temperierten Formen, gegebenenfalls unter Verdichtung, aufschäumen.

Die erfindungsgemäßen Tris-(hydroxyalkyl)isocyanurat-Polyol-Dispersionen finden vorzugsweise Verwendung zur Herstellung von Blockweichschaumstoffen, da sie hier -neben der Verbesserung der Flammbeständigkeit - eine zellöffnende Wirkung zeigen. Die Polyurethanschaumstoffe besitzen bei freier

7

Aufschäumung Dichten von 10 bis 300 g/Liter, wobei die Polyurethan-Weichschaumstoffe Dichten von 10 bis 60 g/Liter, die halbharten Schaumstoffe Dichten von 60 bis 130 g/Liter und die Polyurethan-Integralschaumstoffe Dichten von 60 bis 80 g/Liter aufweisen. Die Polyurethan-Schaumstoffe zeichnen sich insbesondere durch ihren hohen Offenzelligkeitsgrad, guten Stauchhärten und ihre Flammbeständigkeit aus und finden u.a. im Bauwesen zur Schall- und Wärmeisolierung Verwendung. Die Produkte werden vorzugsweise als Polsterschaumstoffe, auch für Sicherheitsabdeckungen sowie für Schuhsohlen, Armlehnen, Nackenstützen, Sitzpolster u.a. verwendet. Die Polyisocyanuratschaumstoffe besitzen Dichten von 5 bis 100 g/Liter, vorzugsweise von 10 bis 50 g/Liter. Aufgrund ihrer vorzüglichen Isoliereigenschaften eignen sie sich besonders für Doppelbandelemente.

Die in den Beispielen genannten Teile sind Gewichtsteile.

## Beispiel 1

Eine Mischung aus 83,3 Teilen eines Diethylenglykolphthalats mit einer Hydroxylzahl von 250 und 16,7 Teilen Tris-(β-hydroxyethyl)isocyanurat wurden unter Rühren auf 120°C erwärmt. Es entstand eine klare Lösung, die man unter Rühren kontinuierlich in 60 Minuten auf 20°C abkühlen ließ. Die erhaltene Dispersion besaß eine Hydroxylzahl von 312, eine Viskosität bei 25°C von 19.000 mPas und eine durchschnittliche Teilchengröße von kleiner als 0,5 mm. Die Dispersion war über einen Zeitraum von mehr als 3 Monaten lagerstabil.

## Beispiel 2

Eine Mischung aus 78 Teilen eines Polyetherols auf Basis von Sucrose und 1,2-Propylenoxid mit einer durchschnittlichen Funktionalität von 4,0 und einer Hydroxylzahl von 400 und 22 Teile Tris-(β-hydroxyethyl)isocyanurat wurden unter Rühren auf 135°C erwärmt. Es entstand eine klare Lösung, die man unter Rühren in 30 Minuten auf 110°C abkühlen ließ. Bei dieser Temperatur begann unter Trübung die Ausscheidung der dispersen Phase. Mit ungefähr 400 Umdrehungen/Minute wurde 1 Stunde bei 110°C gerührt und danach die Dispersion innerhalb von 50 Minuten kontinuierlich auf 20°C abgekühlt. Die erhaltene Dispersion besaß eine Hydroxylzahl von 450, eine Viskosität bei 25°C von 12.000 mPas und eine durchschnittliche Teilchengröße von < 0,3 mm. Die Dispersion war mehr als 4 Monate lagerstabil.

## Beispiel 3

Man verfuhr analog den Angaben bon Beispiel 2, ließ die klare Lösung jedoch innerhalb von einer Stunde unter Rühren von 135 auf 20°C kontinuierlich abkühlen.

Die erhaltene Dispersion besaß eine Hydroxylzahl von 450, eine Viskosität bei 25°C von 20.600 mPas und eine durchschnittliche Teilchengröße von 0,4 mm. Sie war mehr als 3 Monate lagerstabil.

## Beispiel 4

Herstellung eines Polyurethangruppen enthaltenden Polyisocyanuratschaumstoffes.
A-Komponente : Mischung aus.

75 Teilen der Dispersion nach Beispiel 1,
25 Teilen eines Polyetherols auf Basis Sucrose und 1,2-Propylenoxid mit einer durchschnittlichen Funktionalität von 4,0 und einer Hydroxylzahl von 400,
1,0 Teilen eines Stabilisators auf Silikonbasis ((R)Tegostab B 1903 der Firma Goldschmidt, Essen),
0,8 Teilen Dimethylcyclohexylamin,
2,2 Teilen einer 47 gew.%igen Lösung von Kaliumacetat in Ethylenglykol
und
33 Teilen Trichlorfluormethan.

B-Komponente : Mischung auf Diphenylmethan-diisocyanaten und Polyphenyl-polymethylen-polyisocyanaten mit einem NCO-Gehalt von 31 Gew.%.

137 Teile der A-Komponente und 213 Teile der B-Komponente wurden bei 23°C 10 Sekunden lang intensiv gemischt, die Mischung in eine Form eingebracht und in der offenen Form aufschäumen gelassen. Der erhaltene Schaumstoff besaß ein Raumgewicht von 40 g/l. Die Startzeit betrug 18 Sekunden, die Abbindezeit 38 Sekunden und die Steigzeit 60 Sekunden.

Im Brandtest nach DIN 4102 wurde die Klassifikation B 2 mit folgender Charakterisierung ermittelt :
Kantenbeflammung : 9 bis 11 cm,
Flächenbeflammung : 11 bis 13 cm.

Die maximale Reaktionstemperatur im Kern eines Würfels mit einem Schaumvolumen von 2 Liter betrug 137°C.

# 0 136 571

Vergleichsbeispiel A

Man verfuhr analog den Angaben von Beispiel 4, verwandte jedoch in der A-Komponente anstelle von 75 Teilen der Dispersion nach Beispiel 1 75 Teile Diethylenglykolphthalat mit einer Hydroxylzahl von 250. Entsprechend der veränderten Hydroxylzahl wurden von der B-Komponente nur 185 Teile eingesetzt.

Man erhielt einen Schaumstoff mit der Dichte 41,3 g/l bei vergleichbarer Start-, Abbinde- und Steigzeit.

Im Brandtest nach DIN 4102 wurde die Klassifikation B2 knapp bestanden, wobei folgende Charakterisierung ermittelt wurde :

Kantenbeflammung : 13 cm, Kante brannte nach,

Flächenbeflammung : 13 bis 15 cm.

Die maximale Reaktionstemperatur im Kern eines Würfels mit einem Schaumvolumen von 2 Liter betrug 151°C.

## Beispiel 5

Herstellung eines Polyurethangruppen enthaltenden Polyisocyanuratschaumstoffes.

A-Komponente : Mischung aus

90 Teilen der Dispersion nach Beispiel 1,
10 Teilen eines Polyetherols auf Basis Sucrose und 1,2-Propylenoxid mit einer Hydroxylzahl von 400 und Funktionalität von 4,0,
1,0 Teilen eines Stabilisators auf Silikonbasis (Tegostab B 1903),
0,8 Teilen Dimethylcyclohexylamin,
1,4 Teilen einer 47 gew.-%igen Lösung von Kaliumacetat in Diethylenglykol
und
20 Teilen Trichlorfluormethan.

B-Komponente : analog Beispiel 4.

123,2 Teile der A-Komponente und 205 Teile der B-Komponente (Kennzahl 250) wurden bei 23°C 10 Sekunden lang intensiv gemischt, die Mischung in eine Form eingefüllt und in der offenen Form aufschäumen gelassen. Der erhaltene Schaumstoff besaß ein Raumgewicht von 60,9 g/l. Die Startzeit betrug 22 Sekunden, die Abbindezeit 38 Sekunden und die Steigzeit 116 Sekunden.

Im Brandtest nach DIN 4102 wurde die Klassifikation B2 mit folgender Charakterisierung ermittelt :

Kantenbeflammung : 9 bis 11 cm.

Flächenbeflammung : 11 bis 13 cm.

Die maximale Reaktionstemperatur im Kern eines Würfels mit einem Schaumvolumen von 2 Liter betrug 158°C.

## Vergleichsbeispiel B

A-Komponente : Mischung aus

90 Teilen eines Diethylenglykolphthalats mit einer Hydroxylzahl von 250,
10 Teilen eines Polyetherols auf Basis Sucrose und 1,2-Propylenoxid mit einer Funktionalität von 4,0 und einer Hydroxylzahl von 400,
1,0 Teilen eines Stabilisators auf Silikonbasis (Tegostab B 1903),
0,8 Teilen Dimethylcyclohexylamin,
1,4 Teilen einer 47 gew.%igen Lösung von Kaliumacetat in Diethylenglykol
und
16 Teilen Trichlorfluormethan.

B-Komponente : analog Beispiel 4

119,2 Teile der A-Komponente und 160 Teile der B-Komponente (Kennzahl 250) wurden analog Beispiel 5 verschäumt.

Der erhaltene Schaumstoff besaß ein Raumgewicht von 60 g/l. Die Startzeit betrug 17 Sekunden, Abbindezeit 35 Sekunden und die Steigzeit 65 Sekunden.

Im Brandtest nach DIN 4102 wurde die Klassifikation nach B 2 nicht bestanden, da sowohl die Kanten- wie Flächenbeflammung > 15 cm war.

Die maximale Reaktionstemperatur im Kern eines Würfels mit einem Schaumvolumen von 2 Liter betrug 171°C.

## Beispiel 6

Herstellung eines Polyurethangruppen enthaltenden Polyisocyanuratschaumstoffes.

9

A-Komponente : analog Beispiel 5, wobei jedoch die Mengen von folgenden Aufbaukomponenten geändert wurden :

1,7 Teile Stabilisator auf Silikonbasis (Tegostab B 1903),
1,0 Teile einer 47 gew.-%igen Lösung von Kaliumacetat in Diethylenglykol
und
23 Teilen Trichlorfluormethan.

B-Komponente : analog Beispiel 4.

126,5 Teile der A-Komponente und 123 Teile der B-Komponente (Kennzahl 150) wurden analog Beispiel 5 verschäumt.

Der erhaltene Schaumstoff besaß ein Raumgewicht von 40 g/l. Die Startzeit betrug 20 Sekunden, die Abbindezeit 40 Sekunden und die Steigzeit 60 Sekunden.

Im Brandtest nach DIN 4102 wurde die Klassifikation B2 mit folgender Charakterisierung ermittelt :
Kantenbeflammung : 13 bis 15 cm,
Flächenbeflammung : 13 bis 15 cm.

### Vergleichsbeispiel C

A-Komponente : analog Vergleichsbeispiel B, wobei jedoch die Mengen der folgenden Aufbaukomponenten geändert wurden :

1,0 Teile einer 47 gew.-%igen Lösung von Kaliumacetat in Diethylenglykol
und
21 Teile Trichlorfluormethan.

B-Komponente : analog Beispiel 4.

123,8 Teile der A-Komponente und 96 Teile der B-Komponente (Kennzahl 150) wurden analog Beispiel 5 verschäumt.

Der erhaltene Schaumstoff besaß eine Dichte von 40 g/l. Die Startzeit betrug 19 Sekunden, die Abbindezeit 38 Sekunden und die Steigzeit 60 Sekunden.

Im Brandtest nach DIN 4102 wurde die Klassifikation nach B2 nicht bestanden, da der Schaumstoff sowohl bei der Kanten- wie Flächenbeflammung abbrannte.

### Beispiel 7

Man verfuhr analog den Angaben von Beispiel 1, ließ die klare Lösung jedoch innerhalb von 30 Minuten von 120°C auf 90°C abkühlen. Bei dieser Temperatur wurde die Lösung mit einem Teil einer Transpafill-Diethylen-glykolphthalat-Dispersion mit einem Silikatgehalt von 20 Gew.% und einer Primärteilchengröße von 36 nm angeimpft. Durch das Animpfen entstand eine leichte Trübung.

Die angeimpfte Lösung wurde mit einer Rührgeschwindigkeit von 400 Umdrehungen pro Minute bei 90°C 4 Stunden lang gerührt, danach ließ man die Dispersion unter Rühren in 2 Stunden auf 23°C abkühlen.

Die erhaltene Dispersion, die mindestens 6 Monate lagerstabil war, besaß eine Hydroxylzahl von 320, eine Viskosität bei 25°C von 20.000 m.Pas und eine durchschnittliche Teilchengröße von kleiner als 0,1 mm.

### Beispiel 8

Eine Mischung aus 83,3 Teilen eines Diethylenglykolphthalats mit einer Hydroxylzahl von 250 und 16,7 Teilen Tris-(β-hydroxyethyl)isocyanurat wurden in einer Stickstoffatmosphäre bei 180°C eine Stunde lang gerührt. Es entstand eine klare Lösung, die man unter Rühren kontinuierlich auf 90°C abkühlen ließ. Bei dieser Temperatur wurde die Lösung mit einem Teil einer in 6 Mahlgängen hergestellten Dispersion aus 80 Teilen Diethylenglykolphthalat und 20 Teilen Tris-(β-hydroxyethyl)isocyanurat mit einer durchschnittlichen Teilchengröße von 0,05 mm angeimpft. Hierbei entstand in der Reaktionslösung eine leichte Trübung.

Die angeimpfte Lösung wurde analog Beispiel 7 4 Stunden lang bei 90°C gerührt. Danach ließ man die Dispersion in 2 Stunden unter Rühren auf 23°C abkühlen.

Der erhaltenen Dispersion, die mehr als 6 Monate lagerstabil war, besaß eine Hydroxylzahl von 320, eine Viskosität bei 25°C von 24.000 m.Pas und eine durchschnittliche Teilchengröße von kleiner als 0,1 mm.

### Beispiel 9

Man verfuhr analog den Angaben von Beispiel 1, ließ die klare Lösung jedoch innerhalb von 30 Minuten unter langsamen Rühren (100 Umdrehungen/Min.) von 120°C auf 90°C abkühlen.

Bei 90°C wurde die Lösung mit einem Teil einer in 6 Mahlgängen hergestellten Dispersion aus 80 Teilen Diethylenglykolphthalat und 20 Teilen Tris-(β-hydroxyethyl)isocyanurat mit einer durchschnittlichen Teilchengröße von 0,05 mm angeimpft.

Die leicht trübe Lösung ließ man unter langsamen Rühren (100 UpM) in 3 Stunden von 90°C auf 25°C abkühlen.

Die entstandene Dispersion besaß eine Hydroxylzahl von 320, eine Viskosität bei 25°C von 38.300 m.Pas und eine durchschnittliche Teilchengröße von kleiner als 0,05 mm. Die Dispersion war mindestens 6 Monate lagerstabil.

**Patentansprüche**

1. Lagerstabile Tris-(hydroxyalkyl)isocyanurat-Polyol-Dispersionen, die mit einem Tris-(hydroxyalkyl)isocyanuratgehalt von 20 Gew.%, bezogen auf das Gesamtgewicht, bei 25°C eine Viskosität von 100 bis 38.300 m.Pas besitzen, enthaltend
   a) 2 bis 22 Gew.-Teile Tris-(hydroxyalkyl)isocyanurat,
   b) 98 bis 78 Gew.-Teile mindestens eines Polyols mit einer Funktionalität von 2 bis 8 und einer Hydroxylzahl von 20 bis 1.800 und
   c) 0 bis 20 Gew.-Teile eines oder mehrerer Dispersions-stabilisatoren.
2. Lagerstabile Tris-(hydroxyalkyl)isocyanurat-Polyol-Dispersionen nach Anspruch 1, dadurch gekennzeichnet, daß die Tris-(hydroxyalkyl)-isocyanurate eine durchschnittliche Teilchengröße kleiner als 0,5 mm besitzen.
3. Lagerstabile Tris-(hydroxyalkyl)isocyanurat-Polyol-Dispersionen nach Anspruch 1, dadurch gekennzeichnet, daß man als Tris-(Hydroxyalkyl)-isocyanurate Tris-(hydroxyethyl)isocyanurat verwendet.
4. Lagerstabile Tris-(hydroxyalkyl)isocyanurat-Polyol-Dispersionen nach Anspruch 1, dadurch gekennzeichnet, daß man als Polyole Poyesterole und/oder Polyetherole verwendet.
5. Lagerstabile Tris-(hydroxyalkyl)isocyanurat-Polyol-Dispersionen nach Anspruch 1, dadurch gekennzeichnet, daß man als Dispersionsstabilisatoren Verbindungen aus der Gruppe der
   c1) Kieselsäuren und Silikate,
   c2) Salze von perfluorierten Alkylcarbonsäuren mit 4 bis 20 Kohlenstoffatomen,
   Salze von Alkylsulfonsäuren oder perfluorierten Alkysulfonsäuren mit 4 bis 20 Kohlenstoffatomen, Polyperfluoretherole mit Molekulargewichten von 300 bis 6.000 und/oder
   c3) Salze von Fettalkoholsulfaten mit 6 bis 30 Kohlenstoffatomen verwendet.
6. Verfahren zur Herstellung von lagerstabilen Tris-(hydroxyalkyl)isocyanurat-Polyol-Dispersionen mit einer Viskosität von 100 bis 38.300 m.Pas bei 25°C und einem Tris-(hydroxyalkyl)isocyanuratgehalt von 20 Gew.%, bezogen auf das Gesamtgewicht, dadurch gekennzeichnet, daß man
   a) 2 bis 22 Gew.-Teile Tris-(hydroxyalkyl)isocyanurat in
   b) 98 bis 78 Gew.-Teilen mindestens eines Polyols mit einer Funktionalität von 2 bis 8 und einer Hydroxylzahl von 20 bis 1.800, in Gegenwart von
   c) 0 bis 20 Gew.-Teilen eines oder mehrerer Dispersionsstabilisatoren bei Temperaturen von über 100°C löst, und die Lösung unter Rühren kontinuierlich oder stufenweise abkühlen läßt.
7. Verfahren nach Anspruch 6, dadurch gekennzeichnet, daß man die Aufbaukomponenten a) und b) sowie gegebenenfalls c) bei Temperaturen von 101 bis 220°C löst, der Lösung bei einer Temperatur oberhalb der Entmischungstemperatur der Aufbaukomponenten a) une b) und unterhalb der Schmelztemperatur des Kristallisationsbeschleunigers 0,01 bis 3,0 Gew.-Teile pro 100 Gew.-Teile der Lösung mindestens eines organischen und/oder anorganischen Kristallisationsbeschleunigers einverleibt und die Mischung abkühlen läßt.
8. Verfahren zur Herstellung von lagerstabilen Tris-(hydroxyalkyl)isocyanurat-Polyol-Dispersionen mit einer durchschnittlichen Teilchengröße kleiner als 0,5 mm, einer Viskosität von 100 bis 38.300 m.Pas bei 25°C und einem Tris-(hydroxyalkyl)isocyanuratgehalt von 20 Gew.%, bezogen auf das Gesamtgewicht, dadurch gekennzeichnet, daß man
   a) 2 bis 22 Gew.-Teile Tris-(hydroxyethyl)isocyanurat in
   b) 98 bis 78 Gew.-Teilen eines Polyetherols und/oder Polyesterols mit einer Funktionalität von 2 bis 8 und einer Hydroxylzahl von 20 bis 1800 in Gegenwart von
   c) 0 bis 5 Gew.-Teile eines oder mehrerer Dispersionsstabilisatoren bei Temperaturen von 101 bis 140°C löst, der Lösung bei einer Temperatur oberhalb der Entmischungstemperatur der Aufbaukomponenten a) und b) und unterhalb der Schmelztemperatur des Kristallisationsbeschleunigers 0,01 bis 3,0 Gew.-Teile pro 100 Gew.-Teile der Lösung eines organischen und/oder anorganischen Kristallisationsbeschleunigers einverleibt und die Mischung unter Rühren kontinuierlich oder stufenweise abkühlen läßt.
9. Verwendung der lagerstabilen Tris-(hydroxyalkyl)isocyanurat-Polyol-Dispersionen nach Anspruch 1 zur Herstellung von Polyurethankunststoffen, vorzugsweise Polyurethan- oder Polyurethangruppen enthaltenden Polyisocyanuratschaumstoffen.

**Claims**

11

**0 136 571**

1. A tris-(hydroxyalkyl)isocyanurate/polyol dispersion which has a long shelf life, contains 20 % by weight, based on the total weight, of tris-(hydroxyalkyl) isocyanurate and has a viscosity of from 100 to 38,300 mPa.s at 25°C, containing

a) from 2 to 22 parts by weight of tris-(hydroxyalkyl) isocyanurate,

b) from 98 to 78 parts by weight of one or more polyols having a functionality of from 2 to 8 and a hydroxyl number of from 20 to 1,800 and

c) from 0 to 20 parts by weight of one or more dispersion stabilizers.

2. A tris-(hydroxyalkyl) isocyanurate/polyol dispersion having a long shelf life, as claimed in claim 1, wherein the tris-(hydroxyalkyl) isocyanurate has a mean particle size of less than 0,5 mm.

3. A tris-(hydroxyalkyl) isocyanurate/polyol dispersion having a long shelf life, as claimed in claim 1, wherein the tris-(hydroxyalkyl) isocyanurate used is tris-(hydroxyethyl) isocyanurate.

4. A tris-(hydroxyalkyl) isocyanurate/polyol dispersion having a long shelf, as claimed in claim 1, wherein the polyols used are polyesterols and/or polyetherols.

5. A tris-(hydroxyalkyl) isocyanurate/polyol dispersion having a long shelf life, as claimed in claim 1, wherein the dispersion stabilizers used are compounds of the group consisting of the

c1) silicas and silicates,

c2) salts of perfluorinated alkylcarboxylic acids of 4 to 20 carbon atoms,

salts of alkylsulfonic acids or perfluorinated alkylsulfonic acids of 4 to 20 carbon atoms, polyperfluoroetherols having molecular weights of from 300 to 6,000 and/or

c3) salts of fatty alcohol sulfates of 6 to 30 carbon atoms.

6. A process for the preparation of a tris-(hydroxyalkyl) isocyanurate/polyol dispersion having a long shelf life and a viscosity of from 100 to 38,000 m.Pa.s at 25°C and containing 20 % by weight, based on the total weight, of tris-(hydroxyalkyl) isocyanurate, wherein.

a) from 2 to 22 parts by weight of a tris-(hydroxyalkyl) isocyanurate are dissolved in

b) from 98 to 78 parts by weight of one or more polyols having a functionality of from 2 to 8 and a hydroxyl number of from 20 to 1,800, in the presence of

c) from 0 to 20 parts by weight of one or more dispersion stabilizers at above 100°C, and the stirred solution is allowed to cool continuously or stepwise.

7. A process as claimed in claim 6, wherein the components a) and b) and, where relevant, c) are dissolved at from 101 to 220°C, from 0.01 to 3.0 parts by weight, per 100 parts by weight of the solution, of one or more organic and/or inorganic crystallization accelerators are incorporated into the solution at above the separation temperature of the components a) and b) and below the melting point of the crystallization accelerator, and the mixture is allowed to cool.

8. A process for the preparation of a tris-(hydroxyalkyl) isocyanurate/polyol dispersion having a long shelf life, a mean particle size of less than 0.5 mm and a viscosity of from 100 to 38,300 mPa.s at 25°C and containing 20 % by weight, based on the total weight, of tris-(hydroxyalkyl) isocyanurate, wherein.

a) from 2 to 22 parts by weight of a tris-(hydroxyethyl) isocyanurate are dissolved in

b) from 98 to 78 parts by weight of a polyetherol and/or polyesterol having a functionality of from 2 to 8 and a hydroxyl number of from 20 to 1,800, in the presence of

c) from 0 to 5 parts by weight of one or more dispersion stabilizers at from 101 to 140°C, from 0.01 to 3.0 parts by weight, per 100 parts by weight of the solution, of an organic and/or inorganic crystallization accelerator are incorporated into the solution at above the separation temperatur of the components a) and b) and below the melting point of the crystallization accelerator, and the stirred mixture is allowed to cool continuously or stepwise.

9. Use of a tris-(hydroxyalkyl) isocyanurate/polyol dispersion having a long shelf life, as claimed in claim 1, for the preparation of polyurethane plastics, preferably polyurethane foams or polyisocyanurate foams containing polyurethane groups.

**Revendications**

1. Dispersions stables au stockage de polyol et de tris-(hydroxy-alkyl)-isocyanurate qui, avec une teneur en tris-(hydroxy-alkyl)-isocyanurate égale à 20 % de leur poids total, possèdent à 25°C une viscosité comprise entre 100 et 38.300 mPa.s, et qui sont composées de :

a) 2 à 22 parties en poids de tris-(hydroxy-alkyl)-isocyanurate,

b) 98 à 78 parties en poids d'au moins un polyol d'une fonctionnalité de 2 à 8 et d'un indice d'hydroxyle de 20 à 1.800 et de

c) 0 à 20 parties en poids d'un ou de plusieurs agents de stabilisation de la dispersion.

2. Dispersions stables au stockage de polyol et de tris-(hydroxy-alkyl)-isocyanurate suivant la revendication 1, caractérisées en ce que le tris-(hydroxy-alkyl)-cyanurate possède une granulométrie moyenne inférieure à 0,5 mm.

3. Dispersions stables au stockage de polyol et de tris-(hydroxy-alkyl)-isocyanurate suivant la revendication 1, caractérisées en ce que le tris-(hydroxy-alkyl)-cyanurate est du tris-(hydroxy-éthyl)-isocyanurate.

12

4. Dispersions stables au stockage de polyol et de tris-(hydroxy-alkyl)-isocyanurate suivant la revendication 1, caractérisées en ce que l'on emploie comme polyols des poly-ester-ols et(ou) des poly-éther-ols.

5. Dispersions stables au stockage de polyol et de tris-(hydroxy-alkyl)-isocyanurate suivant la revendication 1, caractérisées en ce que les agents de stabilisation de la dispersion sont choisis parmi

c1) les acides siliciques et les silicates,

c2) les sels d'acides alkyl-carboxyliques en C4 à C20 perfluorés, les sels d'acides alkyl-sulfoniques en C4 à C20 éventuellement perfluorés, les poly-perfluor-éther-ols avec des poids moléculaires entre 300 et 6000, et(ou)

c3) les sels de sulfates d'alcools gras en C6 à C30.

6. Procédé de préparation de dispersions stables au stockage de polyol et de tris-(hydroxy-alkyl)-isocyanurate avec une teneur en tris-(hydroxy-alkyl)-cyanurate de 20 % du poids total et d'une viscosité à 25°C comprise entre 100 et 38.300 mPa.s, caractérisé en ce que l'on prépare, à une température supérieure à 100°C, une solution de

a) 2 à 22 parties en poids de tris-(hydroxy-alkyl)-isocyanurate,

b) 98 à 78 parties en poids d'au moins un polyol d'une fonctionnalité de 2 à 8 et d'un indice d'hydroxyle de 20 à 1.800 et de

c) 0 à 20 parties en poids d'un ou de plusieurs agents de stabilisation de la dispersion, qui est ensuite refroidie sous agitation, soit de façon continue, soit en étapes.

7. Procédé suivant la revendication 6, caractérisé en ce que les composants structurels a) et b), ainsi que le composé c) éventuel, sont mis en solution entre 101 et 220°C, on y incorpore ensuite à une température supérieure à la température de démixtion des composants structurels a) et b) et inférieure à la température de fusion de l'accélérateur de cristallisation, entre 0,01 et 3,0 parties en poids d'au moins un accélérateur de la cristallisation organique et(ou) inorganique pour 100 parties en poids de solution, puis on laisse refroidir ce mélange.

8. Procédé de préparation de dispersions de polyol et de tris-(hydroxy-alkyl)-isocyanurate stables au stockage d'une teneur en tris-(hydroxy-alkyl)-isocyanurate de 20 % de leur poids total, d'une viscosité comprise entre 100 et 38.300 mPa.s et d'une granulométrie moyenne inférieure à 0,5 mm, caractérisé en ce que l'on prépare entre 101 et 140°C une solution de

a) 2 à 22 parties en poids de tris-(hydroxy-éthyl)-isocyanurate dans

b) 98 à 78 parties en poids d'un poly-éther-ol et(ou) d'un poly-ester-ol d'une fonctionnalité de 2 à 8 et d'un indice d'hydroxyle de 20 à 1800 en présence de

c) 0 à 5 parties en poids d'un ou de plusieurs agents de stabilisation de la dispersion,

l'on incorpore à cette solution, à une température supérieure à la température de démixtion des composants structurels a) et b) et inférieure à la température de fusion de l'accélérateur de la cristallisation, entre 0,01 et 3,0 parties en poids d'un accélérateur de la cristallisation organique et(ou) minéral pour 100 parties en poids de la solution, puis on laisse refroidir ce mélange de façon progressive ou par étapes.

9. Utilisation de dispersions de polyol et de tris-(hydroxy-alkyl)-isocyanurates stables au stockage suivant la revendication 1 pour la préparation de matières plastiques polyuréthanniques, en particulier de polyisocyanurates à groupe(s) polyuréthanne expansés.